# EUROPEAN PATENT APPLICATION

(11) **EP 4 718 576 A1**
(43) Date of publication of application: **01.04.2026**
(21) Application number: 25181787.0
(22) Date of filing: 10.06.2025
(51) Int. Cl.: H01M 10/44, H02J 7/00, B60L 58/12, B60L 58/25, H01M 10/42, H01M 4/58

(54) **POWER LIMITING METHOD FOR POWER BATTERY, AND DEVICE, AND STORAGE MEDIUM**

(30) Priority: 27.09.2024 CN 202411369214
(71) Applicant: Eve Energy Co., Ltd., Huizhou, Guangdong 516006 (CN)
(72) Inventor: DONG, Yapeng, Huizhou, Guangdong 516006 (CN); LI, Wei, Huizhou, Guangdong 516006 (CN); XIAO, Peng, Huizhou, Guangdong 516006 (CN); SHANG, Jin, Huizhou, Guangdong 516006 (CN); GUO, Qing, Huizhou, Guangdong 516006 (CN)
(74) Representative: Berggren Oy

(57) **Abstract**

The application discloses a power limiting method for a power battery, including steps of: acquiring a real-time voltage of the power battery during charging and discharging processes of the power battery; performing a current limiting operation on the power battery when the real-time voltage exceeds a voltage allowable range, wherein an upper limit of the allowable voltage range is less than a high voltage protection threshold of the power battery, and a lower limit of the allowable voltage range is greater than a low voltage protection threshold of the power battery; ceasing the current limiting operation after the real-time voltage recovers to be in a voltage recovery range, wherein the voltage recovery range is within the voltage allowable range and is smaller than the voltage allowable range.

## Description

### TECHNICAL FIELD

The application relates to the technical field of the control of energy storage battery, and in particular to a power limiting method for a power battery, and a device and storage medium.

### BACKGROUND

Power batteries that are in high-power operation for a long time are very likely to reach the upper and lower voltage limits, thereby triggering the battery's overvoltage protection mechanism. In addition, electric vehicles have high requirements for the performance of their power batteries in terms of power response and power change.

In view of this, the existing technology usually limits the power of the power battery before it reaches the upper and lower voltage limits. However, the existing power limiting method has shortcomings in setting the limiting timing, which often causes power jitter and reduces the driving experience.

### SUMMARY

The application provides a power limiting method for a power battery, and a device and storage medium, so as to improve the reliability of power limiting, reduce the occurrence of power jitter and improve the driving experience.

In a first aspect, the application provides a power limiting method for a power battery, including steps of:
acquiring a real-time voltage of the power battery during charging and discharging processes of the power battery;
performing a current limiting operation on the power battery when the real-time voltage exceeds a voltage allowable range, wherein an upper limit of the allowable voltage range is less than a high voltage protection threshold of the power battery, and a lower limit of the allowable voltage range is greater than a low voltage protection threshold of the power battery; and
ceasing the current limiting operation after the real-time voltage recovers to be in a voltage recovery range, wherein the voltage recovery range is within the voltage allowable range and is smaller than the voltage allowable range.

Optionally, the upper limit of the voltage allowable range is greater than an open circuit voltage of the power battery at a 100% state of charge, and the lower limit of the voltage allowable range is less than the open circuit voltage of the power battery at a 0% state of charge; and

wherein an upper limit of the voltage recovery range is equal to the open circuit voltage of the power battery at a 90% state of charge, and a lower limit of the voltage recovery range is equal to the open circuit voltage of the power battery at a 10% state of charge.

Optionally, the power battery is a lithium iron phosphate battery; and wherein the voltage allowable range is from 2.5V to 3.6V, and the voltage recovery range is from 3.2V to 3.33V.

Optionally, the high voltage protection threshold is equal to an upper limit of a dynamic working voltage of the power battery, and the low voltage protection threshold is equal to a lower limit of the dynamic working voltage of the power battery.

Optionally, the step of performing the current limiting operation on the power battery when the real-time voltage exceeds the voltage allowable range includes steps of:
performing the current derating of the power battery when the real-time voltage is within a limit range, wherein the limit range includes a feedback limit range and a discharge limit range, wherein the feedback limit range has a lower limit that is greater than the upper limit of the voltage allowable range and has an upper limit that is less than the high voltage protection threshold, and the discharge limit range has an upper limit that is less than the lower limit of the voltage allowable range and has a lower limit that is greater than the low voltage protection threshold; and
performing the current zeroing of the power battery when the real-time voltage is in a prohibited range, wherein the prohibited range includes a feedback prohibited range and a discharge prohibited range, wherein the feedback prohibited range has a lower limit that is greater than or equal to the high voltage protection threshold, and the discharge limit range has an upper prohibited that is less than or equal to the low voltage protection threshold.

Optionally, the step of performing the current derating of the power battery when the real-time voltage is within the limit range includes a step of:
derating a working current of the power battery to a preset value or a preset percentage.

Optionally, the step of performing the current derating of the power battery when the real-time voltage is within the limit range includes a step of:
derating a working current of the power battery to a limit percentage according to an excess value of the real-time voltage relative to the voltage allowable range, wherein the limit percentage is negatively correlated with the excess value.

Optionally, the power battery is a lithium iron phosphate battery; and wherein the high voltage protection threshold is 3.65V, and the low voltage protection threshold is 2.0V.

In a second aspect, the application provides an electronic device, including:
at least one processor; and
a memory communicatively connected to the at least one processor;
wherein the memory stores a computer program executable by the at least one processor, and the at least one processor executes the power limiting method for the power battery when the computer program is executed by the at least one processor.

In a third aspect, the application provides a computer-readable storage medium, storing computer instructions that are configured, when executed, to enable a processor to implement the power limiting method for the power battery.

The application provides a power limiting method for a power battery, and a device and storage medium, which allows collecting the real-time voltage of the power battery during the charging and discharging process of the power battery. When the real-time voltage exceeds the voltage allowable range, the power battery is subjected to current limiting operation, wherein the upper limit of the voltage allowable range is less than the high voltage protection threshold of the power battery, and the lower limit of the voltage allowable range is greater than the low voltage protection threshold of the power battery. After the real-time voltage is restored to the voltage recovery range, the current limiting operation is ceased, wherein the voltage recovery range belongs to the voltage allowable range, and is smaller than the voltage allowable range, thereby realizing the power limiting of the power battery. In an aspect, the voltage allowable range is set so that the current limiting is performed before the protection threshold is reached, and the battery voltage is reduced. In another aspect, the voltage recovery range is set to be smaller than the voltage allowable range, so that the normal control is restored in time after the voltage falls back, thereby improving the reliability of the power limiting, reducing the occurrence of power jitter, and improving the driving experience.

It should be understood that the contents described in this section are not intended to identify the key or important features of the embodiments of the application, nor are they intended to limit the scope of the application. Other features of the application will become easily understood through the following description.

### BRIEF DESCRIPTION OF THE DRAWINGS

In order to more clearly illustrate the technical solutions in the embodiments of the application, the accompanying drawings required for use in the description of the embodiments will be briefly introduced below. The accompanying drawings in the following description are only some embodiments of the application. For ordinary technicians in this field, other accompanying drawings can be obtained based on these accompanying drawings without creative work.
FIG. 1 is a schematic diagram of parameter changes of a power battery before and after power jitter occurs in the prior art.
FIG. 2 is a schematic flow chart of a power limiting method for a power battery according to an embodiment of the application.
FIG. 3 is a schematic flow chart of a power limiting method for a power battery according to another embodiment of the application.
FIG. 4 is a schematic diagram of setting a voltage range according to an embodiment of the application.
FIG. 5 is an SOC-OCV relationship of a lithium iron phosphate battery according to an embodiment of the application.
FIG. 6 is a schematic diagram of voltage changes before and after a current limiting operation is performed during charging of a lithium iron phosphate battery at various temperatures according to an embodiment of the application.
FIG. 7 is a schematic diagram of voltage changes before and after a current limiting operation is performed during discharge of a lithium iron phosphate battery at various temperatures according to an embodiment of the application.
FIG. 8 shows a schematic diagram of the structure of an electronic device according to an embodiment of the application.

### DETAILED DESCRIPTION OF THE EMBODIMENTS

In order to enable those skilled in the art to better understand the scheme of the application, the technical scheme in the embodiments of the application will be clearly and completely described below in conjunction with the drawings in the embodiments of the application. Obviously, the described embodiments are only part of the embodiments of the application, not all of the embodiments. Based on the embodiments of the application, all other embodiments obtained by ordinary technicians in this field without creative work should fall within the scope of protection of the application.

It should be noted that the terms "first", "second", etc. in the specification and claims of the application and the above-mentioned drawings are used to distinguish similar objects, and are not necessarily used to describe a specific order or sequence. It should be understood that the data used in this way can be interchanged where appropriate, so that the embodiments of the application described herein can be implemented in an order other than those illustrated or described herein. In addition, the terms "including" and "having" and any variations thereof are intended to cover non-exclusive inclusions, for example, a process, method, system, product or device that includes a series of steps or units is not necessarily limited to those steps or units that are clearly listed, but may include other steps or units that are not clearly listed or inherent to these processes, methods, products or devices.

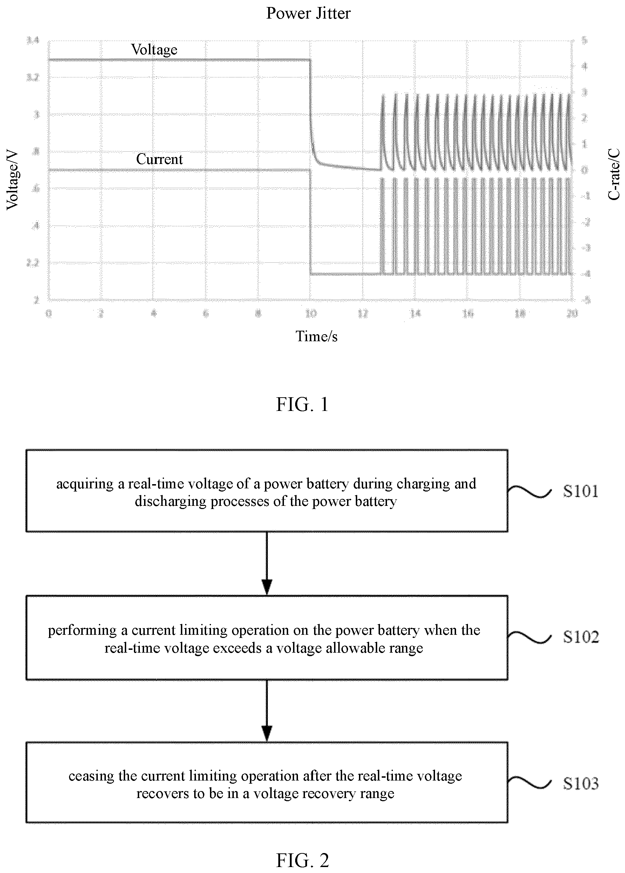

FIG. 1 is a schematic diagram of parameter changes of a power battery before and after power jitter occurs in the prior art. As described in the background, the prior art usually limits the power of the power battery before it is about to reach the upper and lower voltage limits. However, in the case of using the existing power limiting method, if the power limiting and recovery mechanism are set unreasonably, and the electric vehicle accelerates and decelerates suddenly, it will often cause the power jitter phenomenon of the power battery as shown in FIG. 1. In conjunction with FIG. 1, during the power jitter process, the motor speed will change repeatedly in a short period of time, causing the vehicle speed to change unpredictably, greatly reducing the driving experience. How to set a reasonable power limiting strategy so that the power change is stable while protecting the battery is particularly important. Another solution in the prior art is to set multiple current limiting voltages separately under various temperature conditions. In such a method, the current limiting voltage corresponding to the power battery at different temperatures is different, the limiting current is also different, and the recovery voltage is also different. Not only does it require a large amount of parameter calibration, but the control logic is also prone to confusion, which is not conducive to the logical combing and calculation of the power limiting method, and the reliability is poor.

In order to solve the above-mentioned problem, an embodiment of the application provides a power limiting method for a power battery. FIG. 2 is a schematic flow chart of a power limiting method for a power battery according to an embodiment of the application. Referring to FIG. 2, the power limiting method for a power battery includes steps of S101-S103.

S101, acquiring a real-time voltage of a power battery during charging and discharging processes of the power battery.

Specifically, a power battery refers to an energy storage battery that provides an energy source for the driving of an electric vehicle. Exemplarily, the power battery may include a lithium-ion battery. The charging and discharging processes includes a charging process and a discharging process, wherein the charging process refers to the process of charging the power battery using a charging facility, during which the power and voltage of the power battery increase; the discharging process refers to the process of the power battery discharging to the outside, or it may be the process of the power battery supplying power to the power motor of an electric vehicle, during which the power and voltage of the power battery decrease. The real-time voltage of a power battery refers to the voltage across the power battery during the charging and discharging processes. The real-time voltage can be obtained using a voltage sampling device or a voltage sampling circuit.

S102, performing a current limiting operation on the power battery when the real-time voltage exceeds a voltage allowable range.

Specifically, the voltage allowable range refers to the working voltage range under which the power battery is operated normally, and the current limiting operation is not triggered within this range, wherein the working voltage range is the safe voltage range of the power battery, and its upper limit is the high voltage protection threshold, and its lower limit is the low voltage protection threshold. The upper limit of the voltage allowable range is less than the high voltage protection threshold of the power battery, and the lower limit of the voltage allowable range is greater than the low voltage protection threshold of the power battery. The current limiting operation refers to the operation of reducing the charge and discharge current of the power battery on the basis of the original charge and discharge current. For example, when the real-time voltage exceeds the voltage allowable range, the output current of the power battery can be limited to 50% of a first current in the current limiting operation, wherein the first current is the current output from the power battery when the real-time voltage exceeds the voltage allowable range. In another example, when the real-time voltage exceeds the voltage allowable range, the output current of the power battery can be limited to a second current less than the first current in the current limiting operation, wherein the first current is the current output from the power battery when the real-time voltage exceeds the voltage allowable range.

S103, ceasing the current limiting operation after the real-time voltage recovers to be in a voltage recovery range.

Specifically, the voltage recovery range is a smaller voltage range within the voltage allowable range. When the real-time voltage recovers to be in this range, the performing of the current limiting operation on the power battery is ceased and the normal current control mechanism works. The voltage recovery range is in the voltage allowable range. Exemplarily, during the current limiting operation, the real-time voltage of the power battery is continuously acquired, and the real-time voltage of the power battery is monitored; once it is detected that the real-time voltage recovers to be in the voltage recovery range, the current limiting operation is ceased and the normal current control works.

According to the power limiting method for a power battery provided in this embodiment, the real-time voltage of the power battery is acquired during the charging and discharging processes of the power battery. When the real-time voltage exceeds the voltage allowable range, the power battery is subjected to the current limiting operation, wherein the upper limit of the voltage allowable range is less than the high voltage protection threshold of the power battery, and the lower limit of the voltage allowable range is greater than the low voltage protection threshold of the power battery. After the real-time voltage is restored to be in the voltage recovery range, the current limiting operation is ceased, wherein the voltage recovery range is in the voltage allowable range, and is smaller than the voltage allowable range, thereby realizing the power limiting of the power battery. In an aspect, the voltage allowable range is set so that the current limiting is performed before the protection threshold is reached, and the battery voltage is reduced. In another aspect, the voltage recovery range is set to be smaller than the voltage allowable range, so that the normal control is restored in time after the voltage falls back, thereby improving the reliability of the power limiting, reducing the occurrence of power jitter, and improving the driving experience.

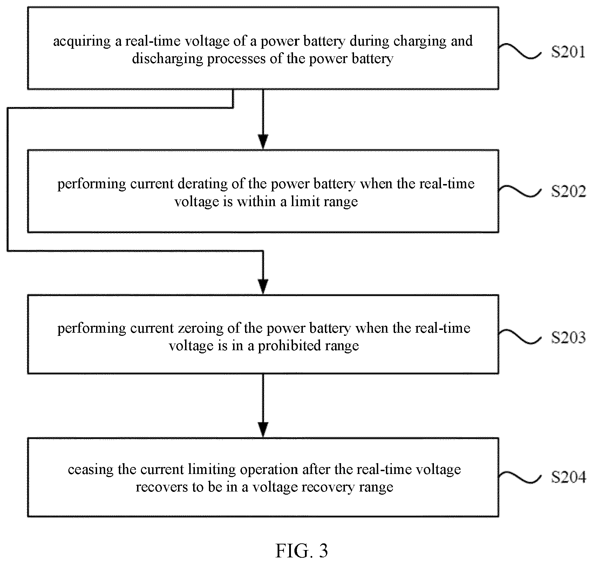

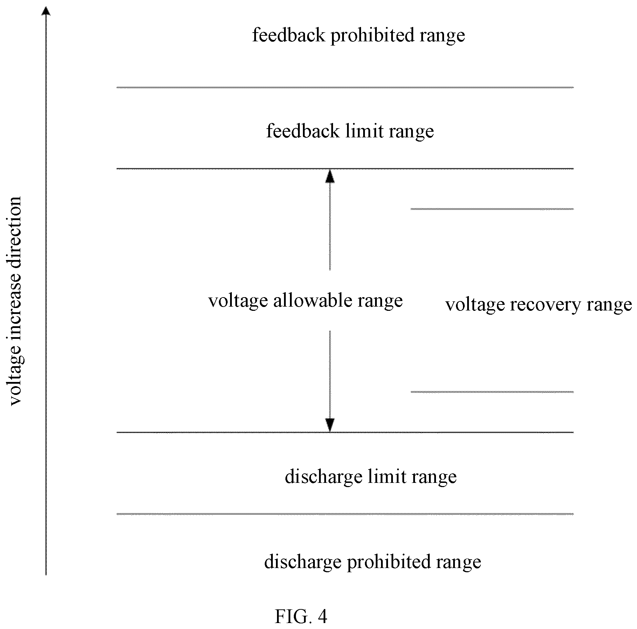

FIG. 3 is a schematic flow chart of a power limiting method for a power battery according to another embodiment of the application. FIG. 4 is a schematic diagram of setting a voltage range according to an embodiment of the application. Based on the above embodiments, in combination with FIGs. 3 and 4, the power limiting method for a power battery includes steps of S201-S204.

S201, acquiring a real-time voltage of a power battery during charging and discharging processes of the power battery.

Step S201 is same as the aforementioned step S101 and will not be described again here.

Step S102 includes steps 202-203 as follows.

S202, performing current derating of the power battery when the real-time voltage is within a limit range.

Specifically, there are two situations when the real-time voltage exceeds the voltage allowable range. One is that the real-time voltage is in the limit range, and the other is that the real-time voltage is in a prohibited range. Here, the limit range is first explained. The limit range refers to the range outside the voltage allowable range but does not exceed the high and low voltage protection thresholds. The limit range includes the feedback limit range and the discharge limit range. The feedback limit range has a lower limit that is greater than the upper limit of the voltage allowable range and has an upper limit that is less than the high voltage protection threshold, and the discharge limit range has an upper limit that is less than the lower limit of the voltage allowable range and has a lower limit that is greater than the low voltage protection threshold. Current derating refers to reducing the real-time current of the power battery. The real-time current includes charging current and discharging current. Corresponding to the feedback limit range and the discharge limit range, the current derating includes derating during the feedback process and derating during the discharging process. Exemplarily, during the charging process of the power battery, the power of the power battery is fed back. Once the voltage across both ends of the power battery is higher than the upper limit of the voltage allowable range and enters the feedback limit range, the charging current of the power battery is reduced to achieve the reduction control of the charging power. When the power battery supplies power to the electric motor, the power battery is in a discharging state. Once the voltage across the power battery is lower than the lower limit of the allowable voltage range and enters the discharge limit range, the current supplied from the power battery is reduced to achieve power reduction control.

In an aspect, the current derating allows the working current of the power battery to be derated to a preset value or a preset percentage, wherein the preset value is less than the current working current and can be determined according to experimental data; and the preset percentage is less than 100%. For example, the preset value can be equal to 1/3C, and the preset percentage can be equal to 50%. Derating the current to a fixed value or a fixed ratio is accurate and reliable, with small calculation amount and high stability. In another aspect, the current derating allows the working current of the power battery to be derated to a limited percentage according to the excess value of the real-time voltage relative to the voltage allowable range, wherein the limited percentage is less than 100% and negatively correlated with the excess value. When the real-time voltage is higher than the upper limit of the voltage allowable range, the excess value is equal to the difference between the real-time voltage and the upper limit of the voltage allowable range; when the real-time voltage is lower than the lower limit of the voltage allowable range, the excess value is equal to the difference between the lower limit of the voltage allowable range and the real-time voltage. The limited percentage is negatively correlated with the excess value, which allows a current derating more adaptable to the excess value of real-time voltage, so that the derating is faster and better.

S203, performing current zeroing of the power battery when the real-time voltage is in a prohibited range.

Specifically, the prohibited range refers to the range whose upper or lower limit exceeds or is equal to the high or low voltage protection threshold. The prohibited range includes a feedback prohibited range and a discharge prohibited range. The lower limit of the feedback prohibited range is greater than or equal to the high voltage protection threshold, and the upper limit of the discharge limit range is less than or equal to the low voltage protection threshold. Current zeroing refers to setting the real-time current of the power battery to 0, and the real-time current includes the charging current and the discharging current. Corresponding to the feedback prohibited range and the discharge prohibited range, the current zeroing includes zeroing during the feedback process and zeroing during the discharging process. Exemplarily, during the charging process of the power battery, the power of the power battery is fed back. Once the voltage across both ends of the power battery exceeds the voltage allowable range and enters the feedback prohibited range, the charging current of the power battery is set to zero to achieve the reduction control of the charging power.

S204, ceasing the current limiting operation after the real-time voltage recovers to be in a voltage recovery range.

Step S204 is the same as the aforementioned step S103, and will not be repeated here.

According to the power limiting method for a power battery provided in this embodiment, the current derating is performed on the power battery when the real-time voltage is in the limit range. When the real-time voltage is in the prohibited range, the current zeroing is performed on the power battery. Different current limiting operations are implemented in different situations. In the current derating, the working current of the power battery can be derated to a preset value or a preset percentage, thereby achieving accurate and reliable derating of the current, with small calculation amount and high stability. In addition, the working current of the power battery can be derated to a limited percentage according to the excess value of the real-time voltage relative to the voltage allowable range, so that the derating is more adaptable to the excess value of real-time voltage, and the derating is faster and better.

Optionally, on the basis of the aforementioned embodiments, the upper limit of the voltage allowable range is not only less than the high voltage protection threshold, but also greater than the open circuit voltage of the power battery at the 100% state of charge. The lower limit of the voltage allowable range is not only greater than the low voltage protection threshold, but also less than the open circuit voltage of the power battery at the 0% state of charge. Corresponding to the upper and lower limits of the voltage allowable range, the upper limit of the voltage recovery range is equal to the open circuit voltage of the power battery at 90% state of charge, and the lower limit of the voltage recovery range is equal to the open circuit voltage of the power battery at 10% charge state.

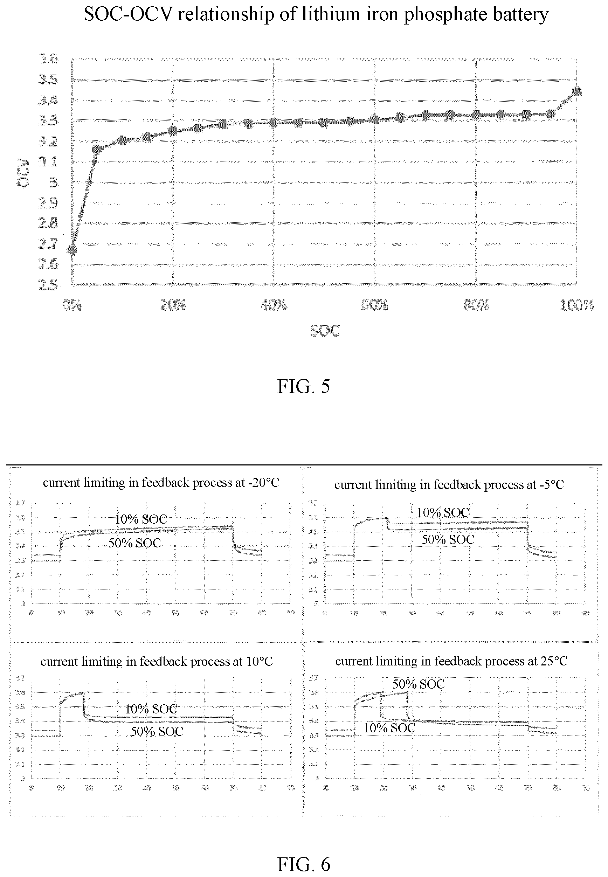

FIG. 5 is an SOC-OCV relationship of a lithium iron phosphate battery according to an embodiment of the application, where SOC is the state of charge, OCV is the open circuit voltage of the battery. Referring to FIG. 5, exemplarily, the open circuit voltage of the lithium iron phosphate battery between 0% SOC and 100% SOC is in the range from 2.669V to 3.442V, and its dynamic working voltage is measured to be 2.0V to 3.65V. The high voltage protection threshold may be equal to the upper limit of the dynamic working voltage of the power battery, so the high voltage protection threshold of the lithium iron phosphate battery is equal to 3.65V, and the low voltage protection threshold may be equal to the lower limit of the dynamic operating voltage of the power battery, so the low-voltage protection threshold of the lithium iron phosphate battery is equal to 2.0V. Then, in the case where the power battery is a lithium iron phosphate battery, the voltage allowable range may be set to be from 2.5V to 3.6V, the voltage recovery range may be set to be from 3.2V to 3.33V.

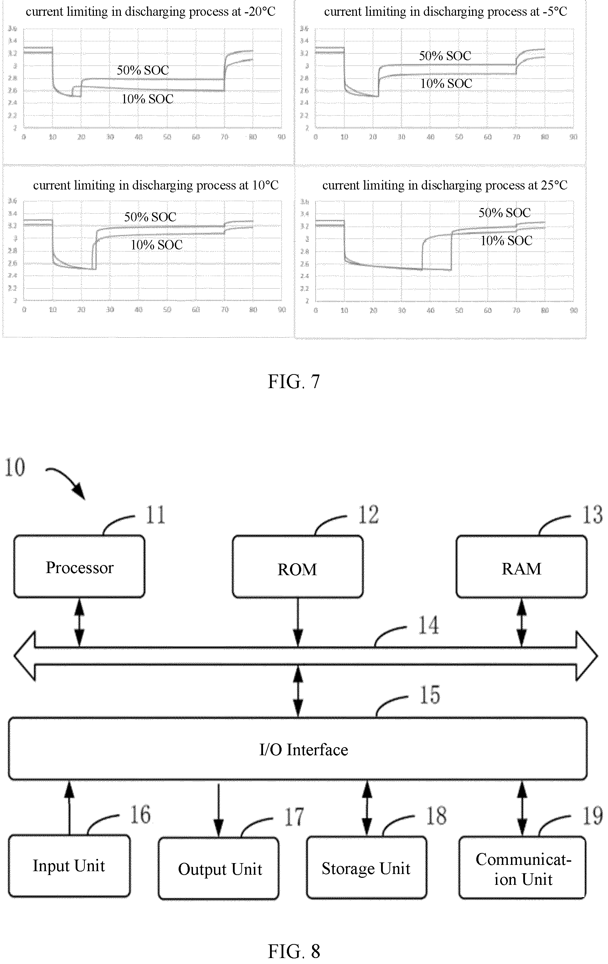

FIG. 6 is a schematic diagram of voltage changes before and after a current limiting operation is performed during charging of a lithium iron phosphate battery at various temperatures according to an embodiment of the application. FIG. 7 is a schematic diagram of voltage changes before and after a current limiting operation is performed during discharge of a lithium iron phosphate battery at various temperatures according to an embodiment of the application. The power batteries shown in FIGs. 6 and 7 has a voltage allowable range from 2.5V to 3.6V and a voltage recovery range from 3.2V to 3.33V, the high voltage protection threshold is equal to the upper limit of the dynamic working voltage of the power battery, which is 3.65V, and the low voltage protection threshold is equal to the lower limit of the dynamic working voltage of the power battery, which is 2.0V. The two curves of the charging process (also called feedback process) at the same temperature correspond different states of charge of the power battery, which are 50% and 90% respectively, and the two curves of the discharging process at the same temperature correspond to different states of charge of the power battery, which are 50% and 10% respectively. Please refer to FIGs. 1, 6 and 7, the power limiting method for a power battery according to the embodiments of the application can reduce the occurrence rate of power jitter at various temperatures, thereby quickly and effectively reducing the power of the power battery, and greatly improving the user's driving experience.

FIG. 8 shows a schematic diagram of the structure of an electronic device according to an embodiment of the application. The electronic device is intended to represent various forms of digital computers, such as laptop computers, desktop computers, workbenches, personal digital assistants, servers, blade servers, mainframe computers, and other suitable computers. The electronic device may be selected from mobile devices of various forms, such as personal digital processor, cellular phones, smart phones, wearable devices (such as helmets, glasses, watches, etc.) and other similar computing devices. The components shown herein, their connections and relationships, and their functions are merely examples and are not intended to limit the implementation of the application described and/or required herein.

As shown in FIG. 8, the electronic device 10 includes at least one processor 11, and a memory in communication and connection with the at least one processor 11, such as a read-only memory (ROM) 12, a random access memory (RAM) 13, etc., wherein the memory stores a computer program executable by at least one processor, and the processor 11 can perform various appropriate actions and processes according to the computer program stored in the read-only memory (ROM) 12 or the computer program loaded from the storage unit 18 to the random access memory (RAM) 13. In the RAM 13, various programs and data used for the operation of the electronic device 10 may be stored. The processor 11, the ROM 12, and the RAM 13 are connected to each other through a bus 14. An input/output (I/O) interface 15 is also connected to the bus 14.

Multiple components in the electronic device 10 are connected to the I/O interface 15, which includes: an input unit 16, such as a keyboard, a mouse, etc.; an output unit 17, such as various types of displays, speakers, etc.; a storage unit 18, such as a disk, an optical disk, etc.; and a communication unit 19, such as a network card, a modem, a wireless communication transceiver, etc. The communication unit 19 allows the electronic device 10 to exchange information/data with other devices through a computer network such as the Internet and/or various telecommunication networks.

The processor 11 may be various general and/or special processing components with processing and computing capabilities. Some examples of the processor 11 include, but are not limited to, a central processing unit (CPU), a graphics processing unit (GPU), various special artificial intelligence (AI) computing chips, various processors running machine learning model algorithms, a digital signal processor (DSP), and any appropriate processor, controller, microcontroller, etc. The processor 11 performs the various methods and processes described above, such as the power limiting method for a power battery.

In some embodiments, the power limiting method for a power battery may be implemented as a computer program, which is tangibly contained in a computer-readable storage medium, such as a storage unit 18. In some embodiments, part or all of the computer program may be loaded and/or installed on the electronic device 10 via the ROM 12 and/or the communication unit 19. When the computer program is loaded into the RAM 13 and executed by the processor 11, one or more steps of the power limiting method for a power battery described above may be performed. Alternatively, in other embodiments, the processor 11 may be configured to execute the power limiting method for a power battery in any other appropriate manner (e.g., by means of firmware).

Various embodiments of the systems and techniques described above herein may be implemented in digital electronic circuit systems, integrated circuit systems, field programmable gate arrays (FPGAs), application specific integrated circuits (ASICs), application specific standard products (ASSPs), systems on chips (SOCs), load programmable logic devices (CPLDs), computer hardware, firmware, software, and/or combinations thereof. These various embodiments may include: being implemented in one or more computer programs, which may be executed and/or interpreted on a programmable system including at least one programmable processor, which may be a dedicated or general programmable processor, which may receive data and instructions from a storage system, at least one input device, and at least one output device, and transmit the data and instructions to the storage system, the at least one input device, and the at least one output device.

The computer program for implementing the method of the application may be written in any combination of one or more programming languages. These computer programs can be provided to the processor of general-purpose computer, special-purpose computer or other programmable data processing device, so that the computer program makes the function/operation specified in the flow chart and/or block diagram be implemented when executed by the processor. The computer program can be executed completely on the machine, partially on the machine, as an independent software package, partially on the machine and partially on the remote machine or completely on the remote machine or server.

In the context of the application, computer-readable storage medium may be a tangible medium, which can contain or store a computer program used for or in combination with an instruction execution system, device or equipment. Computer-readable storage medium can include but is not limited to electronic, magnetic, optical, electromagnetic, infrared or semiconductor system, device or equipment, or any suitable combination of the above. Alternatively, computer-readable storage medium may be a machine-readable signal medium. More specific examples of machine-readable storage media may include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the above.

In order to provide interaction with a user, the systems and techniques described herein may be implemented on an electronic device having: a display device (e.g., a CRT (cathode ray tube) or LCD (liquid crystal display) monitor) for displaying information to a user; and a keyboard and pointing device (e.g., a mouse or trackball) through which a user can provide input to the electronic device. Other types of devices may also be used to provide interaction with a user; for example, the feedback provided to the user may be any form of sensory feedback (e.g., visual feedback, auditory feedback, or tactile feedback); and input from the user may be received in any form (including acoustic input, voice input, or tactile input).

The systems and techniques described herein may be implemented in a computing system including a backend component (e.g., as a data server), or a computing system including a middleware component (e.g., an application server), or a computing system including a frontend component (e.g., a user computer with a graphical user interface or a web browser through which a user can interact with an implementation of the systems and techniques described herein), or a computing system including any combination of such backend components, middleware components, or frontend components. The components of the system may be interconnected by digital data communication in any form or medium (e.g., a communication network). Examples of communication networks include: a local area network (LAN), a wide area network (WAN), a blockchain network, and the Internet.

A computing system may include a client and a server. The client and server are generally remote from each other and typically interact through a communication network. The client-server relationship is generated by computer programs running on respective computers and having a client-server relationship with each other. The server may be a cloud server, also known as a cloud computing server or cloud host, which is a host product in a cloud computing service system to solve the defects of difficult management and weak business scalability in traditional physical hosts and VPS services.

It should be understood that the various forms of processes shown above can be used to reorder, add or delete steps. For example, the steps described in the application can be executed in parallel, sequentially or in different orders, as long as the desired results of the technical solution of the application can be achieved, and this document is not limited here.

## Claims

1. A power limiting method for a power battery, **characterized in that** the power limiting method comprises steps of:
acquiring (S101, S201) a real-time voltage of the power battery during charging and discharging processes of the power battery;
performing (S102) a current limiting operation on the power battery when the real-time voltage exceeds a voltage allowable range, wherein an upper limit of the allowable voltage range is less than a high voltage protection threshold of the power battery, and a lower limit of the allowable voltage range is greater than a low voltage protection threshold of the power battery; and
ceasing (S103, S204) the current limiting operation after the real-time voltage recovers to be in a voltage recovery range, wherein the voltage recovery range is within the voltage allowable range and is smaller than the voltage allowable range.

2. The power limiting method for the power battery according to claim 1, **characterized in that** the upper limit of the voltage allowable range is greater than an open circuit voltage of the power battery at a 100% state of charge, and the lower limit of the voltage allowable range is less than the open circuit voltage of the power battery at a 0% state of charge; and
wherein an upper limit of the voltage recovery range is equal to the open circuit voltage of the power battery at a 90% state of charge, and a lower limit of the voltage recovery range is equal to the open circuit voltage of the power battery at a 10% state of charge.

3. The power limiting method for the power battery according to claim 2, **characterized in that** the power battery is a lithium iron phosphate battery; and
wherein the voltage allowable range is from 2.5V to 3.6V, and the voltage recovery range is from 3.2V to 3.33V.

4. The power limiting method for the power battery according to claim 1, **characterized in that** the high voltage protection threshold is equal to an upper limit of a dynamic working voltage of the power battery, and the low voltage protection threshold is equal to a lower limit of the dynamic working voltage of the power battery.

5. The power limiting method for the power battery according to any one of claims 1-4, **characterized in that** the step of performing (S102) the current limiting operation on the power battery when the real-time voltage exceeds the voltage allowable range comprises steps of:
performing (S202) current derating of the power battery when the real-time voltage is within a limit range, wherein the limit range comprises a feedback limit range and a discharge limit range, wherein the feedback limit range has a lower limit that is greater than the upper limit of the voltage allowable range and has an upper limit that is less than the high voltage protection threshold, and the discharge limit range has an upper limit that is less than the lower limit of the voltage allowable range and has a lower limit that is greater than the low voltage protection threshold; and
performing (S203) current zeroing of the power battery when the real-time voltage is in a prohibited range, wherein the prohibited range comprises a feedback prohibited range and a discharge prohibited range, wherein the feedback prohibited range has a lower limit that is greater than or equal to the high voltage protection threshold, and the discharge prohibited range has an upper limit that is less than or equal to the low voltage protection threshold.

6. The power limiting method for the power battery according to claim 5, **characterized in that** the step of performing (S202) the current derating of the power battery when the real-time voltage is within the limit range comprises a step of:
derating a working current of the power battery to a preset value or a preset percentage.

7. The power limiting method for the power battery according to claim 5, **characterized in that** the step of performing (S202) the current derating of the power battery when the real-time voltage is within the limit range comprises a step of:
derating a working current of the power battery to a limit percentage according to an excess value of the real-time voltage relative to the voltage allowable range, wherein the limit percentage is negatively correlated with the excess value.

8. The power limiting method for the power battery according to claim 5, **characterized in that** the power battery is a lithium iron phosphate battery; and
wherein the high voltage protection threshold is 3.65V, and the low voltage protection threshold is 2.0V.

9. An electronic device (10), **characterized in that** the electronic device comprises:
at least one processor (11); and
a memory communicatively connected to the at least one processor (11);
wherein the memory stores a computer program executable by the at least one processor (11), and the at least one processor (11) executes the power limiting method for the power battery according to any one of claims 1-8 when the computer program is executed by the at least one processor.

10. A computer-readable storage medium, **characterized by** storing computer instructions that are configured, when executed, to enable a processor (11) to implement the power limiting method for the power battery according to any one of claims 1-8.
